# EUROPÄISCHE PATENTSCHRIFT

(11) **EP 3 014 965 B1**
(45) Veröffentlichungstag und Bekanntmachung des Hinweises auf die Patenterteilung: **07.06.2017**
(21) Anmeldenummer: 15401101.9
(22) Anmeldetag: 15.10.2015
(51) Int. Cl.: A01B 23/02

(54) **BODENBEARBEITUNGSWERKZEUG**
SOIL WORKING TOOL
OUTIL DE TRAVAIL DU SOL

(30) Priorität: 20.10.2014 DE 102014115208
(43) Veröffentlichungstag der Anmeldung: 04.05.2016
(73) Patentinhaber: Amazonen-Werke H. Dreyer GmbH & Co. KG, 49205 Hasbergen (DE)
(72) Erfinder: Scherf, Silvio, 39444 Hecklingen OT Cochstedt (DE); Polster, Joachim, 04229 Leipzig (DE)

(56) Entgegenhaltungen:
- DE-A1-102012 111 138
- FR-A1- 2 679 099

## Beschreibung

Die Erfindung betrifft ein Bodenbearbeitungswerkzeug gemäß des Oberbegriffs des Patentanspruches 1.

Ein derartiges Bodenbearbeitungswerkzeug ist in der DE 10 2012 111 138 A1 beschrieben. Dieses Bodenbearbeitungswerkzeug ist als Grubberschar ausgebildet. Im Bereich der Zinkenspitze ist zur Erreichung einer höheren Standzeit, d.h. einen geringeren Verschleiß des Grubberschares eine Aufpanzerung in Form von Hartmetallplatten angebracht.

Weiterhin sind in der Praxis Grubberschare bekannt geworden, die beabstandet zu der Zinkenspitze und zueinander kerbartige Vertiefungen aufweisen. Diese kerbartigen Vertiefungen sind jeweils von der Längsmittellinie des Schares nach außen erstreckend und symmetrisch ausgestaltet. Die Längsmittellinie der kerbartigen Vertiefungen verlaufen hier quer zur Längsmittellinie des Schares bzw. quer zur Fahrtrichtung des Bodenbearbeitungsgerätes, an dem das Bodenbearbeitungswerkzeug angeordnet ist. Derartig ausgestaltete kerbartige Vertiefungen, insbesondere die jeweils vordere schräg nach außen unten verlaufende Kante der Vertiefung, stören den gleichmäßigen Fluss des aufgebrochenen Bodens über die kerbartigen Vertiefungen.

Der Erfindung liegt die Aufgabe zu Grunde, einen verbesserten Verschleißschutz und somit eine längere Standzeit des Bodenbearbeitungswerkzeuges bei verbesserten Bodenfluss über das Bodenbearbeitungswerkzeug zu erreichen.

Diese Aufgabe der erfindungsgemäß dadurch gelöst, dass der zinkenartige Bereich zwei in Längsrichtung des Bodenbearbeitungswerkzeuges verlaufende Seitenstreifen mit sich in Querrichtung erstreckende kerbartige Vertiefungen aufweist, dass die in Richtung der Spitze des zinkenartigen Bereiches vordere Kante der kerbartigen Vertiefungen zumindest annähernd parallel zu einer Linie quer zur Fahrtrichtung der Maschine und/oder zumindest annähernd horizontal verläuft, dass die in Richtung der Spitze des zinkenartigen Bereiches hintere Kante der kerbartigen Vertiefungen zumindest unter einem Winkel von 25°, vorzugsweise 35° zur vorderen Kante der jeweiligen kerbartigen Vertiefung vom inneren Bereich zum äußeren Bereich des zinkenartigen Bereiches schräg von der Spitze des zinkenartigen Bereiches weg verläuft.

Infolge dieser Maßnahmen ergibt sich ein verbesserter Fluss des aufgebrochenen Bodens über die erfindungsgemäß ausgestalteten kerbartigen Vertiefungen in Verbindung mit einem besseren Verschleißschutz.

Einer weiterer verbesserter Fluss des aufgebrochenen Bodens über das Bodenbearbeitungswerkzeug wird dadurch erreicht, dass zwischen den beiden Seitenstreifen in der Mitte ein in Längsrichtung des zinkenartigen Bereiches des Bodenbearbeitungswerkzeuges sich ein zumindest annähernd glatter Mittelstreifenbereich befindet. Gleichzeitig wird ein verbesserter Verschleißschutz hierdurch erreicht.

Im vorteilhafterweise sind die auf jeder Seite gegenüberliegenden kerbartigen Vertiefungen derart angeordnet, dass die vorderen Kanten der auf der linken und rechten Seite angeordneten jeweils gegenüberliegenden kerbartigen Vertiefungen zumindest auf und/oder parallel zu einer durch die vorderen Kanten verlaufenden Linie liegen. Hierdurch wird auch ein gleichmäßiger Fluss mit einem verbesserten Verschleißverhalten des Bodenbearbeitungswerkzeuges erreicht.

In einer Ausführungsform ist vorgesehen, dass die beiden mit kerbartigen Vertiefungen versehenen Seitenstreifen und der zumindest annähernd glatte Mittelstreifen jeweils zumindest annähernd die gleiche Breite aufweisen. Hierdurch wird eine optimierte Zuordnung der kerbartigen Vertiefungen zu dem annähernd glatten Mittelstreifen erreicht.

Bei Versuchen hat sich als vorteilhaft gezeigt, dass in jedem Seitenstreifen mehr als drei kerbartige Vertiefungen hintereinander angeordnet sind.

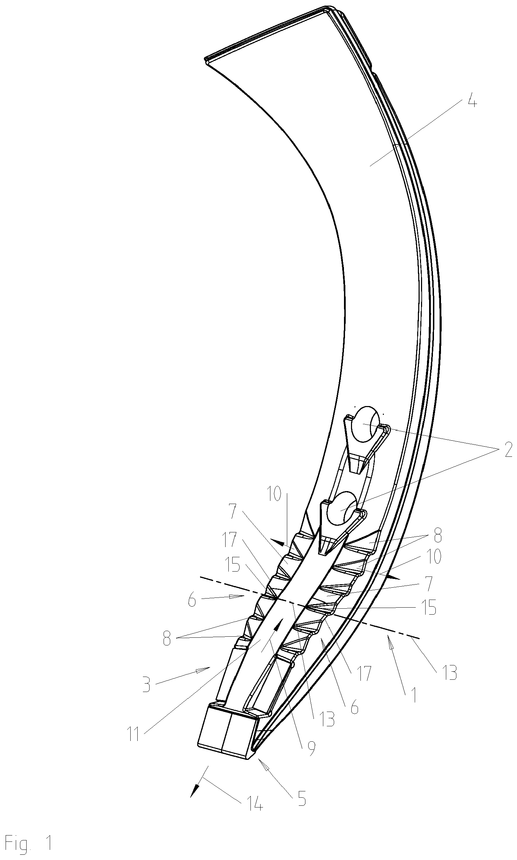

Weitere Einzelheiten der Erfindung sind der Beispielsbeschreibung und den Zeichnungen zu entnehmen. Die Zeichnungen zeigen
- Fig.1: das erfindungsgemäße Bodenbearbeitungswerkzeug in perspektivischer Darstellung,

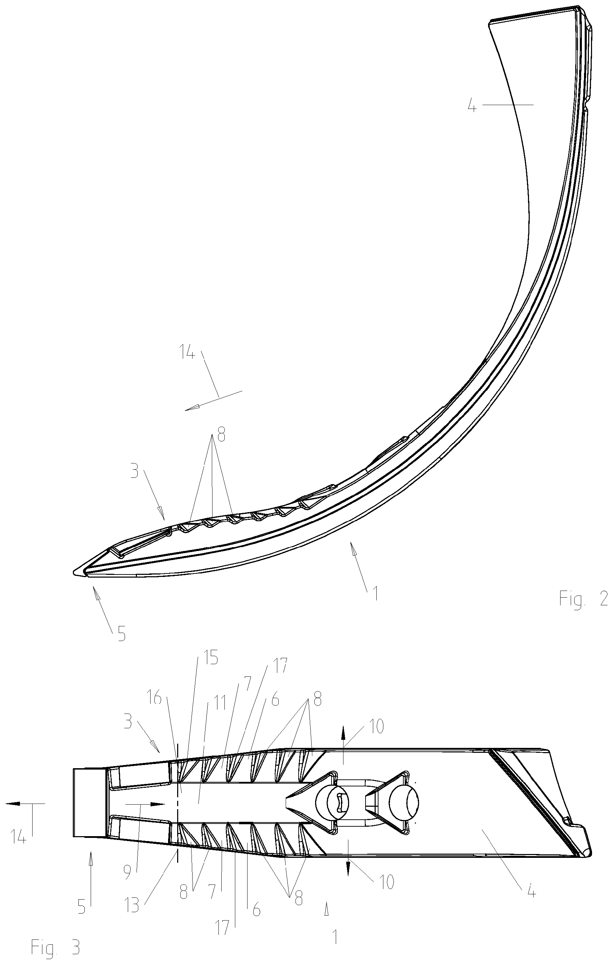

- Fig.2: das Bodenbearbeitungswerkzeug in Seitenansicht und
- Fig.3: das Bodenbearbeitungswerkzeug in Vorderansicht.

Das als Grubberschar 1 ausgebildete Bodenbearbeitungswerkzeug für eine landwirtschaftliche Maschine ist mittels durch die in dem Bodenbearbeitungswerkzeug 1 angeordneten Durchbrüche 2 zu steckenden Befestigungsmittel, beispielsweise Schrauben in nicht dargestellter Weise an einem ebenfalls nicht dargestellten Werkzeughalter befestigt. Das Bodenbearbeitungswerkzeug 1 weist einen vorderen zinkenartigen Bereich 3 auf, an dem sich ein leitblechartiges Element 4, welches, wie im Ausführungsbeispiel dargestellt, in sich verbunden ausgestaltet ist, anschließt.

An der Zinkenspitze 5, die sich zu Beginn des zinkenartigen Bereiches 3 befindet, sind Hartmetallplatten 6, die beispielsweise aus Wolframcarbid stehen können, angeordnet. Beabstandet zu der Zinkenspitze 5 beginnen auf beiden Seiten 6 des Grubberschares 1 Seitenstreifen 7, in denen kerbartige Vertiefungen 8 angeordnet sind. Somit weist der zinkenartige Bereich 3 zwei in Längsrichtung 9 des Grubberschares 1 verlaufende Seitenstreifen 7 mit sich in Querrichtung 10 nach außen erweiternde kerbartige Vertiefungen 8 auf. Zwischen den beiden Seitenstreifen 7 befindet sich in der Mitte des Grubberschares 1 ein sich in Längsrichtung 9 des zinkenartigen Bereiches 3 des Grubberschares 1 zumindest annähernd glatter Mittelstreifenbereich 11. In jedem Seitenstreifen 7 sind mehr als drei, im Ausführungsbeispiel sechs kerbartige Vertiefungen 8 angeordnet. Die beiden mit kerbartigen Vertiefungen 8 versehenen Seitenstreifen 7 und der zumindest annähernd glatte Mittelstreifen 11 weisen jeweils zumindest annähernd die gleiche Breite auf.

Die jeweils in Richtung der Spitze 5 des zinkenartigen Bereiches 3 vordere Kante 12 der kerbartigen Vertiefungen 8 verläuft zumindest annähernd parallel zu einer Linie 13 quer zur Fahrtrichtung 14 der Maschine und zumindest annähernd horizontal. Die in Richtung der Spitze 5 des zinkenartigen Bereiches 3 hintere Kante 15 der kerbartigen Vertiefungen 8 verläuft zumindest unter einem Winkel von 25°, vorzugsweise 35° zur vorderen Kante 12 der jeweiligen kerbartigen Vertiefung vom inneren Bereich 16 des zinkenartigen Bereiches 3 zum äußeren Bereich 17 des zinkenartigen Bereiches 3 schräg von der Spitze 5 des zinkenartigen Bereiches weg.

Die vorderen Kanten 12 der auf der linken und rechten Seite angeordneten jeweils gegenüberliegenden kerbartigen Vertiefungen 8 liegen zumindest annähernd auf zu einer durch die vorderen Kanten 12 verlaufenden Linie 13.

## Patentansprüche

1. Bodenbearbeitungswerkzeug für eine landwirtschaftliche Maschine, insbesondere Grubberschar (1), welches an einem Werkzeughalter befestigt ist und einen zinkenartigen Bereich (3), an dem sich vorzugsweise ein leitblechartiges Element (4) anschließt, **dadurch gekennzeichnet, dass** der zinkenartige Bereich (3) zwei in Längsrichtung (9) des Bodenbearbeitungswerkzeuges (1) verlaufende Seitenstreifen (7) mit sich in Querrichtung (10) erstreckende kerbartige Vertiefungen (8) aufweist, dass die in Richtung der Spitze (5) des zinkenartigen Bereiches (3) vordere Kante (12) der kerbartigen Vertiefungen (8) zumindest annähernd parallel zu einer Linie (13) quer zur Fahrtrichtung (14) der Maschine und/oder zumindest annähernd horizontal verläuft, dass die in Richtung der Spitze (5) des zinkenartigen Bereiches (3) hintere Kante (15) der kerbartigen Vertiefungen (8) zumindest unter einem Winkel von 25°, vorzugsweise 35° zur vorderen Kante (12) der jeweiligen kerbartigen Vertiefung (8) vom inneren Bereich (16) zum äußeren Bereich (17) des zinkenartigen Bereiches (3) schräg von der Spitze (5) des zinkenartigen Bereiches (3) weg verläuft.

2. Bodenbearbeitungswerkzeug nach Anspruch 1, **dadurch gekennzeichnet,**
**dass** zwischen den beiden Seitenstreifen (7) in der Mitte ein in Längsrichtung (9) des zinkenartigen Bereiches (3) des Bodenbearbeitungswerkzeuges (1) sich ein zumindest annähernd glatter Mittelstreifenbereich (11) befindet.

3. Bodenbearbeitungswerkzeug nach zumindest einem der vorstehenden Ansprüche, **dadurch gekennzeichnet, dass** die vorderen Kanten (12) der auf der linken und rechten Seite angeordneten jeweils gegenüberliegenden kerbartigen Vertiefungen (8) zumindest auf und/oder parallel zu einer durch die vorderen Kanten (12) verlaufenden Linie (13) liegen.

4. Bodenbearbeitungswerkzeug nach zumindest einem der vorstehenden Ansprüche, **dadurch gekennzeichnet, dass** die beiden mit kerbartigen Vertiefungen (8) versehenen Seitenstreifen (7) und der zumindest annähernd glatte Mittelstreifen (11) jeweils zumindest annähernd die gleiche Breite aufweisen.

5. Bodenbearbeitungswerkzeug nach zumindest einem der vorstehenden Ansprüche, **dadurch gekennzeichnet, dass** in jedem Seitenstreifen (7) mehr als drei kerbartige Vertiefungen (8) hintereinander angeordnet sind.

## Claims

1. Soil working tool for an agricultural machine, in particular a cultivator blade (1), which is fastened on a tool holder and which a tine-like region (3), which is adjoined by a preferably guide-plate-like element (4), **characterized in that** the tine-like region (3) has two side strips (7), which run in the longitudinal direction (9) of the soil working tool (1) and have notch-like depressions (8) extending in the transverse direction (10), **in that** the leading edge (12) of the notch-like depressions (8), as seen in the direction of the tip (5) of the tine-like region (3), runs at least more or less parallel to a line (13) in the direction transverse to the direction (14) of travel of the machine and/or at least more or less horizontally, **in that** the trailing edge (15) of the notch-like depressions (8), as seen in the direction of the tip (5) of the tine-like region (3), runs obliquely away from the tip (5) of the tine-like region (3), at least at an angle of 25°, preferably 35°, in relation to the leading edge (12) of the respective notch-like depression (8), as it extends from the inner region (16) of the tine-like region (3) to the outer region (17) of the tine-like region (3).

2. Soil working tool according to Claim 1, **characterized in that**, between the two side strips (7), an at least more or less smooth central-strip region (11) is located in the centre, a in the longitudinal direction (9) of the tine-like region (3) of the soil working tool (1).

3. Soil working tool according to at least one of the preceding claims, **characterized in that** the leading edges (12) of the notch-like depressions (8), which are located opposite one another in each case on the lefthand and right-hand sides, are located at least on and/or parallel to a line (13) which runs through the leading edges (12).

4. Soil working tool according to at least one of the preceding claims, **characterized in that** the two side strips (7), which are provided with notch-like depressions (8), and the at least more or less smooth central strip (11) are each at least more or less of the same width.

5. Soil working tool according to at least one of the preceding claims, **characterized in that** more than three notch-like depressions (8) are arranged one behind the other in each side strip (7).

## Revendications

1. Outil de travail du sol pour une machine agricole, en particulier soc (1), qui est fixé à un porte-outil et qui une région en forme de dent (3), à laquelle se raccorde de préférence un élément de type déflecteur (4), **caractérisé en ce que** la région en forme de dent (3) présente deux bandes latérales (7) s'étendant dans la direction longitudinale (9) de l'outil de travail du sol (1) avec des creux de type encoches (8) s'étendant en direction transversale (10), **en ce que** l'arête avant (12) des creux de type encoches (8) en direction de la pointe (5) de la région en forme de dent (3) s'étend au moins approximativement parallèlement à une ligne (13) transversale à la direction de déplacement (14) de la machine et/ou au moins approximativement horizontalement, **en ce que** l'arête arrière (15) des creux de type encoches (8) en direction de la pointe (5) de la région en forme de dent (3) s'étend au moins sous un angle de 25°, de préférence de 35° par rapport à l'arête avant (12) du creux de type encoche respectif (8) depuis la région intérieure (16) jusqu'à la région extérieure (17) de la région en forme de dent (3) en s'éloignant en oblique de la pointe (5) de la région en forme de dent (3).

2. Outil de travail du sol selon la revendication 1, **caractérisé en ce qu'**entre les deux bandes latérales (7) une région de bande centrale au moins approximativement lisse (11) se trouve au milieu, une dans la direction longitudinale (9) de la région en forme de dent (3) de l'outil de travail du sol (1).

3. Outil de travail du sol selon au moins une des revendications précédentes, **caractérisé en ce que** les arêtes avant (12) des creux de type encoches (8) respectivement opposés disposés sur le côté gauche et sur le côté droit sont situées au moins sur et/ou parallèlement à une ligne (13) passant par les arêtes avant (12).

4. Outil de travail du sol selon au moins une des revendications précédentes, **caractérisé en ce que** les deux bandes latérales (7) dotées des creux de type encoches (8) et la bande centrale (11) au moins approximativement lisse présentent respectivement au moins approximativement la même largeur.

5. Outil de travail du sol selon au moins une des revendications précédentes, **caractérisé en ce que** plus de trois creux de type encoches (8) sont disposés l'un derrière l'autre dans chaque bande latérale (7).
